Europäisches Patentamt

European Patent Office

Office européen des brevets

(11) Publication number: **0 139 478**
**B1**

(12) **EUROPEAN PATENT SPECIFICATION**

(45) Date of publication of patent specification: **28.06.89**　(51) Int. Cl.⁴: **G 11 B 7/26**

(21) Application number: **84306384.3**

(22) Date of filing: **19.09.84**

(54) **Improved method for overcoating optical recording media.**

(30) Priority: **23.09.83 US 535173**

(43) Date of publication of application:
**02.05.85 Bulletin 85/18**

(45) Publication of the grant of the patent:
**28.06.89 Bulletin 89/26**

(84) Designated Contracting States:
**IT**

(56) References cited:
**EP-A-0 021 741**
**EP-A-0 072 378**
**WO-A-84/02220**
**DE-A-3 203 599**

**PATENT ABSTRACTS OF JAPAN vol. 7, no. 70,
23rd March 1983, page (P-185) (1215); &
JP-A-58-1144 (FUJITSU) 06-01-1983**

**PATENT ABSTRACTS OF JAPAN vol. 6, no. 137,
24th July 1982, page (P-130) (1015); & JP-A-57-
60456 (FUJITSU) 12-04-1982**

(73) Proprietor: **UNISYS CORPORATION
1, Burroughs Place
Detroit Michigan 48232 (US)**

(72) Inventor: **Lee, Neville
3472 Avenue Ladera
Thousand Oaks, CA 91362 (US)**
Inventor: **Ho, Wu-Jing
19355 Sherman Way
Reseda, CA 91355 (US)**
Inventor: **Teolis, Joseph B.
605 Hampshire Road
445 Westlake Village CA 91361 (US)**

(74) Representative: **Kirby, Harold Douglas Benson
et al
G.F. Redfern & Company Marlborough Lodge 14
Farncombe Road
Worthing West Sussex BN11 2BT (GB)**

EP 0 139 478 B1

Courier Press, Leamington Spa, England.

**Description**

The present invention relates to methods of applying protective overcoatings, especially as adapted to enhance service life and recording characteristics.

Introduction, background

Optical storage of digital data is a relatively volatile technology now, being concerned with the storage and retrieval of digital information utilizing optical techniques and using a special related (ODD, "optical digital data") medium, such as an ODD disk. By analogy such data is conventionally stored on magnetic media like tapes or disks commonly used with high speed digital computers today.

Here described are some novel approaches to making rendering protective coatings over a sensitive optical recording medium—e.g., one resisting oxidation or like environmental degradation, wherein sensitivity is improved, extended life is feasible and fabrication parameters are simplified over what is now conventional.

Various types of protective overcoatings for such media have been suggested by workers, especially relative to "tuned media" (e.g., media using a "dark mirror" effect; for instance see U.S. 4,222,071 to *Bell*, et al; also see "Review of Optional Storage Media" by *Zech*, SPIE Vol. 177, Optical Information Storage, 1979, page 56, et sequ.; also see "Optical Recording Media Review" by Bartolini, page 2, et sequ. of 1977, SPIE Vol. 123, "Optical Storage Materials and Methods"; and see "Melting Holes in Metal Films for Real-time High Density Data Storage" by Cochran and Ferrier, SPIE Proceedings, August 1977, pages 17—31; and other citations below).

JP—A—57-60546 discloses providing a first protective film made of rubberlike high polymer on a recording film deposited on a substrate and providing a second protective film of organic macromolecular polymer such as light curing epoxy resin and acrylic resin.

JP—A—58-1144 discloses a method of coating a disk by a photoresist. A pipe for supplying the photoresist is moved at a prescribed speed towards the periphery of the disc while the disc is rotated at a proper low speed. Then rotation is continued, permitting the photoresist to flow over the substrate, and a proper uniform thickness is obtained.

It is an object of the invention to provide on "soft pad" materials adjacent an "optical recording layer" a relatively "Harder" supercoat. The invention is set out in Claim 1. Further embodiments are contained in Claims 2—18.

Brief description of the drawings

These and other features and advantages of the present invention will be appreciated by workers as they become better understood by reference to the following detailed description of the present preferred embodiments, these being considered in conjunction with the accompanying drawings, wherein like reference symbols denote like elements:

Fig. 1 provides a cross-sectional view of a recording medium embodiment exhibiting a construction in accordance with features of the present invention; and

Fig. 2 very schematically indicates a preferred method of applying overcoat material of the kind taught herein.

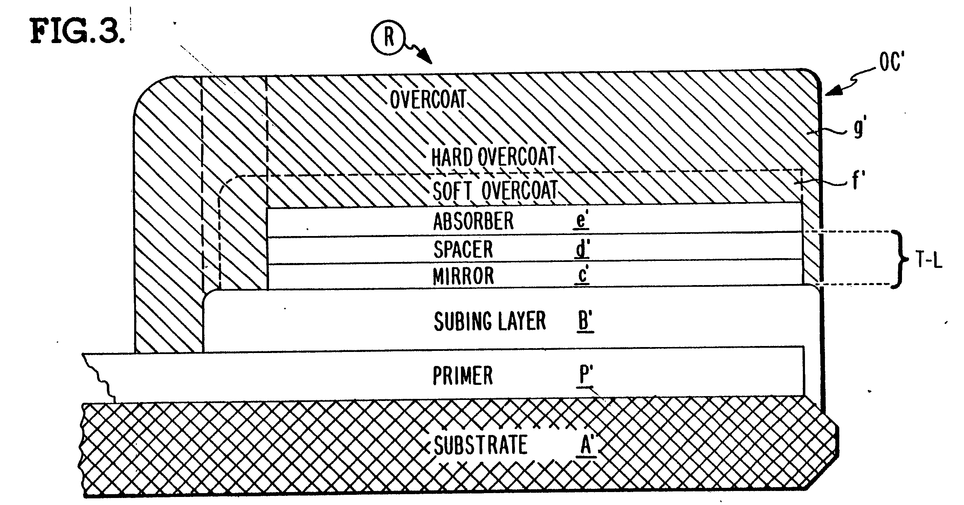

Fig. 3 is a view after the manner of Fig. 1 indicating a modified embodiment.

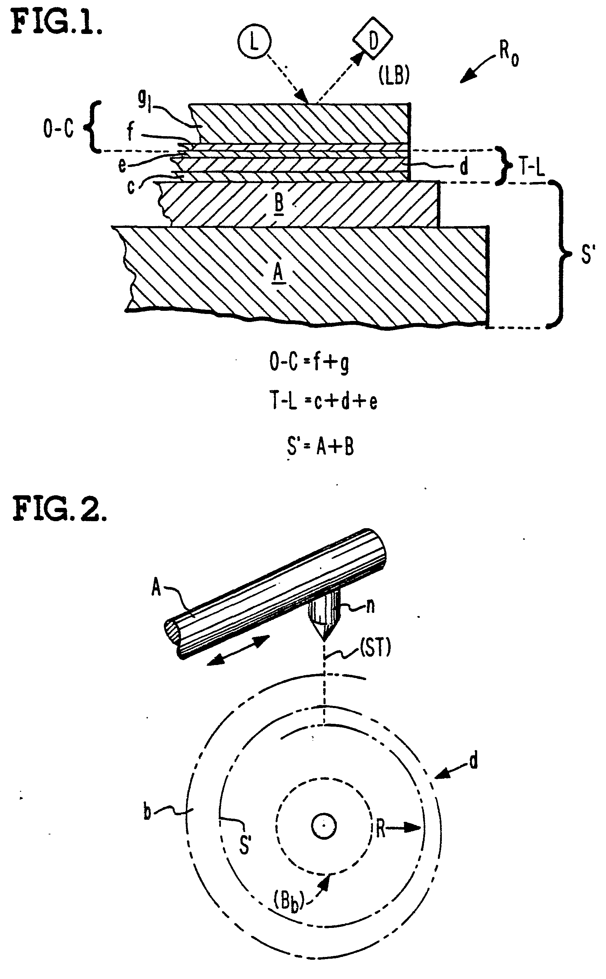

Exemplary OD recording—Example I (Fig. 1; tri-layer with "overcoat"):

Fig. 1 will be understood to (schematically and in idealized fashion) depict a fragmentary section of an optical data disk $R_D$, including a substrate disk A supporting a recording tri-layer T-L and overlying protective overcoat O-C. Disk $R_D$ will be understood as intended and adapted for recording by a known radiation source (Laser L) directing a beam (LB in phantom) at a tri-layer T-L so as to record certain bits therein—these to be "read" using prescribed associated detect (D), as known in the art.

The wavelength of the reading laser beam (LB of Fig. 1) is chosen so that unrecorded regions of the disk $R_D$ exhibit the desired anti-reflection condition; read-beam intensity will be kept low enough so as to not disturb the integrity of data recorded on the disk. Substrate A preferably comprises a relatively conventional magnetic recording disk with a smoothing layer B, applied thereon as necessary. Tri-layer T-L preferably comprises a transparent spacer layer d atop a reflector film c, with a suitable absorber or recording film e superposed on spacer d.

It will thus be understood that the reflected read-beam will be intensity-modulated by optically detectable changes at bit sites where data was recorded. Thus, the read beam will experience relatively high reflection when incident on a "bit" and relatively low reflection when incident on unwritten regions. Protective means O-C is a Hard/Soft composite overcoat chosen and arranged so that dust particles on its upper surface will be displaced far from the focal plane of the optical system (i.e., placed out of focus); and so have a negligible effect on the recording and reading operations.

It is conventionally assumed that, for the laser beam to "write" (i.e. "record" and produce an optically detectable disturbance in the reflectivity of the thin film absorber layer c) absorber film e, at any given bit-site, must be heated to a prescribed (minimum) write-temperature (Tw). The level of minimum temperature Tw is believed to depend on the properties of absorber c (e.g., on its thickness, metallurgy, microscopic structure, etc.) and also on the properties of subjacent spacer d, as well as upon "interface characteristics" between the spacer d and absorber e, and possibly between overcoat O-C and absorber e.

It will be found that a finite time is required for writing at a "bit site" on which the writing laser beam is here assumed to be focused) to reach this requisite minimum "recording temperature" Tw. But while a "bit site" is being so heated, some of the applied heat is typically assumed to be escaping through underlying dielectric spacer d (also through O-C, possibly) and thus "wasted". To the extent such heat is lost, more time/energy are required to "write" of course, i.e., recording sensitivity is commensurately degraded. It is also believed that such heat-loss can reduce the quality of the recording and thereby reduce "recording density" for a given medium.

Preferred overcoat embodiment; ("Hard/Soft" overcoat O-C):

Disk $R_D$ in Fig. 1 (only small schematic section shown) illustrates a preferred example of the features mentioned above, and especially the (general) teaching of a "Hard" overcoat applied over a "soft pad" layer covering an absorber (optical recording film)—i.e., a novel "Hard/Soft" overcoating structure O-C (cf. Fig. 1, Hard coat g and soft pad layer f over absorber e, which is part of the ODD 'tri-layer' T-L applied on substrate A). It will now be described with reference to this schematic showing.

Substrate:

The substrate is preferably the surface of disk A, as treated, when necessary, with a smoothing or subbing layer B to make its surface sufficiently smooth. Thus, substrate A is preferably a common "Winchester" disk, such as used in commerical magnetic recording disks for computer media. It comprises an aluminum alloy, prepared as is typical for fabricating disks for high speed magnetic recording of digital data (e.g., as used in computer memory systems). The surface of such disks is commonly polished, diamond-turned or otherwise smoothed, as workers well know. Alternatively, a suitable glass or plastic disk may be substituted in certain instances.

"Subbing" layer B will be understood as applied to the bare, well-cleaned disk surface. The "subbing" preferably comprises an organic material to so smooth the microscopic irregularities on the surface of substrate A to well under "hole size" (e.g., about 0.5 μm or less in diameter). If the surface is already smooth enough (e.g., if a highly polished glass disk is used), a subbing layer may not be necessary, as workers know.

This substrate is thus understood as preferably comprising a 14" disk to be operated at about 1800 (to several thousand) rpm, with good surface smoothness.

A radiation (laser) beam of prescribed energy and wavelength will be understood as applied to medium $R_D$ from a laser source L (see Fig. 1), being activated and focused at "write time" so as to render a "pit", "hole" or like optical "anomaly" apt for the contemplated read-out on recording layer e in the course of "writing". More particularly, one may, for example, contemplate using a 10 mW gaussian beam with diameter of 0.8 μm (i.e., 8000 Å) and scanning at 45 n.sec. to form an optical transition with a certain minimum length and width, e.g., 0.8 μm², though not necessarily square, circular or other prescribed shape. Now, this requirement is too stringent for conventional means, as workers realize (e.g., for achival records).

So, where each "pit" (bit) is recorded, the "anti-reflective" background will be disrupted such as to yield "bit marks" adapted for high-contrast read-back. And, where the recording wavelength is shifted, the spacer thickness is readily altered to give like results. In this "tuned" ("tri-layer" or "Dark Mirror") configuration, surface reflectance (on absorber e) can be made "zero", or other selected value, by adjusting absorber thickness and spacer thickness. (A "tri-layer" being here understood as comprising a transparent spacer with absorber on one face and reflector on the other, thicknesses being adjusted for "optical tuning" as workers will know).

Thus, the coating parameters here will be understood as selected to preferably provide an "anti-reflective" condition for the so-coated disk at the contemplated recording frequency when the write beam is focused on this absorber layer. (Regarding such see above, and also: *"Anti-Reflection Structures for Optical Recording"* by Bell and Spong, Journal of Quantum Electronics, Vol. QE 14, No. 7, July 1978; and, for general prior art, see exemplary articles: "Optical Disk Systems Emerge", IEEE Spectrum by Bartolini, et al, August 1978, page 20; and "Optical Storage Materials and Methods", SPIE Proceedings, Vol. 177, Optical Information Storage, 1979, page 56).

Recording portion ("Dark Mirror" type):

The recording face of disk $R_D$ may be visualized as an "absorber layer" (e) together with an appropriate subjacent "spacer layer" (d) and a "reflector layer" (c), below spacer d, as well known in the art. As another aspect of this disclosure, such layers (c, d and e) are preferably applied by successive evaporative coating sequences with appropriate materials in a single high-vacuum chamber, and preferably together with "soft pad" overcoating (f) also as descirbed above.

Alternatively, these applications might be rendered by a suitable plasma polymerization technique or other appropriate methods for producing films of the mentioned type. Workers will recognize, as a feature of advantage here, the teaching of materials and techniques which may accommodate such a series of like deposition steps using a common a deposition apparatus, (e.g., especially where spacer layer d and a soft overcoating f both comprise like "soft pads").

Reflector layer c comprises, preferably, a layer of high reflectivity metal such as vapor-deposited gold or aluminum as above discussed; e.g., deposited until layer c is "just opaque" under the contemplated illumination, as viewed through layer c (as workers knowledgable about making evporated reflectors well known, too thick a reflector will degrade reflectivity). And as workers know, other metals can, at times, be used so long as they provide sufficient high reflectance at the contemplated R/W wavelengths. Another option is to use dielectric films of alternating high and low index and with a quarter-wave reflector.

Spacer layer d, is intended to function, in combination with the reflector layer c and absorber layer e, to reduce the reflectance of the "tri-layer" assembly to zero, or to some other predetermined reflectance value. The materials used will preferably be relatively "non-absorbing" and highly transparent to the contemplated R/W wavelengths. The thickness of spacer d will depend on its optical properties and those of the other layers in this tri-layer. Preferably a thickness of 0.5 to 1.5 quarter waves will be used. Alternatively, multiple half-wave thicknesses can be added as workers will see. (Note: from an optical standpoint, a spacer of thickness $t_s=\frac{1}{2}n\lambda_r$, will "disappear").

Layer e (Fig. 1, still) is the absorbing film in which the working incident "write energy" is to be concentrated.

Overcoat portion:

"Soft pad" coating f preferably consists of a convenient thickness (e.g., a few thousand Å) of a fluoropolymer (e.g., preferably and conveniently be the same material and deposition method as for spacer layer d). It is preferably formulated and deposited (on absorber e) as described above, most preferably being laid-down in the same overall deposition sequence; cf. with tri-layer T-L for convenience.

Where using the "tri-layer", it will be convenient to detect and control thickness with layer f being deposited as one or more half-waves. As workers will realize, a number of half-wave thicknesses will make the soft overcoating "disappear" optically, and thus not reflect read/write energy meant for the absorber layer (—this would reduce system efficiency).

"Soft pad" supercoating f will be sufficiently "soft" and yielding to maximize sensitivity, will be relatively non-porous, thermally insulative, with a relatively low specific heat, as well as being highly transparent to the contemplated R/W wavelengths ($\lambda_r$) as mentioned above. Also, it will bond firmly to the superposed "Hard" barrier layer, but couple rather loosely to the underlying absorber (e.g., which preferably will be relatively non-reactive with the "pad")—also a flash inter-coating can, of course, be used. It should also be chemically stable, compatible (not project contaminants in record $R_D$) and able to be matched thermally and mechanically to adjust layers (i.e., to absorber e and hard coat g). Ideally it will also be cost-effective and convenient to apply (e.g., with same deposition methods and equipment as layers c,d,e).

The above-described fluoropolymer material will be found to meet most, if not all, these stringent requirements (as summarized in Table I above), though other like materials (e.g., like plasma polymerized fluoropolymers) will be suitable in appropriate instances. And, when such "soft pads" sandwich an absorber on both sides, the "thermal-mechanical isolation" thus afforded will be recognized as exceptional.

Further treatment of "soft pad" overcoating f may be necessary to optimize its compatibility and bonding to contiguous coatings (e.g., to enhance adhesion of its exposed surface to the "hard" overcoating and/or to weaken its bond with the underlying absorber layer. For instance, it has been found that certain "promoters" applied to the exposed surface of such a "soft pad" are often preferable for enhancing the wetting, etc., of a hard overcoating g like the radiation-cured acrylics described below. Such a "promoter" can evidently reduce moisture absorption and raise the "surface energy" $E_s$ of the soft pad, and lower the "free energy" of the substrate/coating system. One may prefer to promote wetting and hydroxyl affinity providing related "polar groups" on a TFE or FEP soft pad surface (these increasing surface energy $E_s$; e.g., vs. other coatings which raise $E_s$). A methyl methacrylate, or MMA provides such a (compatible) polar group. One may deposit such a "polar strike" by plasma (branching) polymerization (e.g., for 10+ minutes in the case of MMA) or by plasma etching or the like. Alternatively, one may lower $E_s$ and favor coating of such a soft pad via a light transparent "strike" of metal or metal oxide (these raising $E_s$ and improving wetting). As a feature hereof, such "soft pad" supercoatings will be seen to give strong adhesion to a hard supercoat thereon, but be coupled relatively loosely to the underlying absorber layer.

The rest of the overcoating O-C on absorber e (i.e., the outer portion) is made up—according to a related feature hereof—of "Hard" overcoating layer g, comprised of the below-specified acrylic-epoxy. This serves not only to provide outer mechanical protection and the needed defocusing thickness (with pad f), but also serves as a good vapor barrier and anti-static surface. The preferred formulations for hard overcoat g and related preferred methods for preparing and applying such are detailed below.

The thickness of layer g will, to some extent, depend on the optical system used (e.g., correcting spherical aberration in the focusing objective may be involved); it has been found that thicknesses on the order of 200 micrometers are quite suitable for this embodiment.

4

Results: (Ex. I. Fig. 1):

The "hard/soft" overcoat embodiment suggested above (with the acrylated epoxy as in Mix T-1 below, applied on the "soft pad" with underlying absorber, tri-layer, etc.) will be seen to give surprisingly good sensitivity (e.g., superior to analogous records where a thick SiO$_2$ overcoat overlays the absorber), as well as providing the other desired characteristics mentioned above (e.g., Table I).

The Hard/soft overcoating will be recognized by workers as superior to such common (non-composite) coatings as fused silica (e.g., reducing required write-energy, giving longer, better environmental stability and service—especially in respect of moisture uptake).

Example I-A: ("Hard" coating for Ex. I; preparation, application, curing):

This Example is intended to describe the preparation and characteristics of a preferred radiation-cured acrylic-epoxy hard coating mixture T-1 as applied to the Example I embodiment (on "soft-pad" supercoat overlying the absorber) and also to describe a general method of applying this to a substrate and then curing it in situ. Later, further details of a particular preferred method for applying this to a prescribed optical data disk will be described (see description below in connection with Fig. 2).

Workers will agree that the desired "Hard" outercoat for such optical disks should not only function as a protective layer (to protect the media from dust contamination and environmental degradation, etc.), but also should have other properties such as high optical transmission, minimum effect on sensitivity and S/N performance of the medium, UV-curable coatings are more acceptable for industrial applications than conventional thermal-cured coatings, e.g., because they have a faster cure cycle, less energy consumption and less environmental pollution (no problematic solvent emission). It should not attract dust (be static-free) should be very "clear" and highly transparent to R/W λ, very strong, somewhat flexible, adhere well to "soft pad" and not badly degrade optical R/W performance. It should have good mechanical integrity despite humidity/temperature cycling (e.g., not be brittle or easily fracture, no delaminate or curl due to internal stress) and have good abrasion-resistance.

In general, the UV curable coating here will comprise an unsaturated resin, unsaturated monomer and photoinitiator. The formulation of ingredients is "state of the art", but requires a complete understanding of the functions of the constituent parts and their function.

Working at room temperature and otherwise standard conditions, the following "Hard overcoat" prepolymer mixture T-1 is prepared, being intended for application as a "Hard" protective overcoating, about 7—10 mils thick, and having the described characteristics as uniformly spread and cured on a prescribed optical data disk surface.

This surface may be understood as comprising a properly-treated aluminum disk substrate (e.g., with smoothing pre-coat thereon) with a tri-layer optical recording matrix superposed thereon, followed by a plasma polymerized thin, "soft pad" supercoating (of "soft pad" fluoropolymer). Such a fluoropolymer is, thus, the substrate of choice here.

| Mix T-1 | Wt %- pref. | Approx. range |
|---|---|---|
| "Celrad 3701" (Acrylated epoxy resin) | 36 | 30—40 |
| TMPTA (Tri-acrylated monomer—for cross-linking) | 24 | 20—30 |
| 2-EhA (mono-acrylated monomer; to flexibilize) | 36 | 30—40 |
| FC-430 (Fluoro-carbon wetting agent)[1] | 1 | 0.5—2 |
| I-184 (non-yellowing UV-initiator) | 2 | 1—4 |
| Z-6020 (clarifying adhesion-promoter) | 1 | 0.5—2 |

The Celrad 3701 (Celanese Corp.) will be understood to be an acrylated epoxide "basic" bulk-resin which is readily cured by ultraviolet light (as below) when properly initiated. This basic resin is selected to impart the desired strength and chemical stability to the cured coating over relatively extended service life; and because it very quickly and conveniently cures and yields fairly good clarity. Importantly, it allows relatively little moisture absorption. Also, like all the other constituents it is preferred here because it is generally low-cost, easy to formulate and apply, and because it yields the desired "archival" protective coating (as mentioned elsewhere).

The viscosity of Mix T-1 should be monitored lest it become too thick and viscous to apply readily (see preferred spiral application technique below—e.g., mix must flow through a dispensing nozzle). Also, the cured coating should exhibit little or no water uptake lest it might later tend to swell and crack.

5

However, since 3701 can tend to discolor slightly over time, it should be used with additives that promote clarification and resist yellowing as noted below.

Workers will recognize that other like, low-viscosity co-monomers (or pre-polymer, low-viscosity diluents) may be substituted, adjusting viscosity accordingly. For instance, certain other Celrad formulations may be suitable in some instances. However, other common coating polymers are not feasible; for instance, acrylated urethane which is prone to cause "orange peel". And other like acrylated resins are not apt for substitution. For instance, Celrad 3200, another acrylated epoxide is apt to induce coating separation, delamination, cracking or fracture (is less viscous, with more flexibility and less tensile strength). And Celrad 1700 (acrylated acrylate) gives similar problems. And moisture-intrusion and shrinkage can be reduced by adding a saturated resin (e.g., a derivative of polystyrene like polyvinyl acetate).

The trimethyl-ol propane triacrylate (TMPTA) is a trifunctional acrylate monomer, serving to promote cross-linking in this mixture. Other like (acrylate) cross-linking agents might be substituted, such as (trimethyl-ol trimethacrylate). Some such cross-linker will usually be used—to enhance coating strength, etc., as workers well know—preferably (another acrylate cross-linker).

Elimination of TMPTA or the Celrad (without replacing by equivalents) will tend to soften the cured overcoat and reduce shrinkage.

The 2-ethylhexyl acrylate (2-EHA, Celanese Corp.) is a mono-functional acrylate monomer, supplemental to the "3701" and added, here, to improve flexibility of the final polymer coat. Workers will recognize that other such diluents may be substituted such as isodecyl acrylate or styrene.

The "Irgacure 184" ("I-184"; Ciba Geigy) is a photoinitiator apt for such (UV) curing of such a mixture. This UV-initiator is found surprisingly (possibly uniquely) apt for such purposes, especially because it is surprisingly resistant to discoloration (yellowing) of the cured overcoat (e.g., when used in such a mixture as T-1, including Z-6020 as discussed below).

This is especially surprising because such discoloration (yellowing) does result when a closely-similar companion UV-initiator Irgacure #651 (by Ciba-Geigy also) replaces the Irgacure #184 (possibly because #651 has more unsaturated bonds and/or might include quinonidal end-groups; cf. #184: a hydroxy-cyclo hexyl phenone; #651: 2,2-dimethoxy-2-phenyl acetophenone).

The Z-6020 (by Dow Corning) is a diamino primer added to T-1 to promote coating adhesion (to "soft pad" substrate) and also to clarify the coating) reduce "yellowing" or amber color otherwise resulting). This clarification is somewhat unexpected. The "yellowing" mechanism is not fully understood; hydroxyl groups may play a role.

For instance, replacement of Z-6020 with another conventional adhesion-promoter, (Z-6040 or Z-6030 are good), leaves the T-1 coating subject to yellowing.

Thus, it will be understood as critical to the desired results to employ an initiator like I-184 and an adhesion promoter like Z-6020.

Mix T-2

By contrast, elimination of Z-6020 in T-1 and replacement of I-184 with the mentioned I-651 yielded a coating (T-2) that exhibited decided "yellowing" under (ambient) conditions; also toughness was inferior. Viscosity was about 110 cp at 25°C, density 1.07 gm/cc.

Mix T-3

Now, replicating mix T-2, but replacing I-651 with I-184, reduces the yellowing, but still leaves the coating with a light amber tone. This coating is tougher than that of T-2. A thickness of about 10 mils gave transmission of as high as 92.4% at 6328 Å.

Mix T-1

Now, adding Z-6020 to Mix T-3 to produce T-1, essentially eliminates all discoloration leaving a very clear, transparent coating).

This "promoter" (Z-6020) is believed to react with the moisture and hydroxyl groups in the mix solution. I believe it removes the amber colorant of the hydroxyl group. Tests indicate this T-1 film has much stronger adhesion to the substrate and maintains good flexibility, (after being in the environmental chamber for 50 hours at 70°C and 80% R.H., this film did not show any crack or delamination on the tri-layered disk).

That is, a disk with an overcoat film made with T-1 mix will pass severe environmental testing conditions (MIL-STD-810C). It can be placed in a chamber with conditions of 70°C and 80% R.H. for 50 hours and will show no visible delamination or cracks at all.

The "FC-430" is a fluoropolymer "surfactant" additive (by 3M Co.) characterized as a "non-ionic surfactant" for organic polymeric coating systems. It is added to promote good wetting, leveling and spreading functions and as a flow control agent, being adapted for reducing surface tension of certain coatings on certain substrates. It is promoted as being very non-reactive and as compatible with water-based or solvent-based systems (and with most polymers). "FC-430" might, with certain adjustments, be replaced by a like surfactant such as zonyl FSN by DuPont.

The Mixture T-1 should be "viscosity adjusted" to optimize spreading and disk application; here, final viscosity should be about 41 cp (25°C, density: 1.07 gm/cc), given the subject ambient conditions (room temperature, fluoropolymer substrate surface, etc.).

The T-1 formulation (and similar mixtures) is quite tolerant of any number of other additives of widely varying chemistry; so, where appropriate, these may be added (e.g., an anti-static agent).

Curing:

With the material spread evenly across the subject disk (fluoropolymer) surface and essentially all oxygen driven-off (e.g., by $N_2$ or like inert pre-flush, etc., as detailed below), the coating is photo-cured by exposure to ultraviolet light for a few minutes while the disk is slowly rotated. This renders a good fully-cured "hard" overcoating (no supplemental heat needed, no aging time necessary for complete polymerization).

More particularly, and preferably, a nitrogen pre-flush is invoked (e.g., for about 1 minute to drive off all oxygen), then exposure, under nitrogen, to UV for about 3—5 minutes, or sufficient to cure the coating as desired. Preferably, this is done while slowly rotating the disk (e.g., 20 rpm; note, the preferred UV beam falls mostly in λ0.3 to 0.4 μm. range, with intensity varying with λ—e.g., 50 mW/cm² for 3.5 minutes at .366 μm.—longer if less initiator is used).

Radiation-curing is preferred over other (superfically-related) methods. For instance, thermal curing is unduly complex and hard to control; also it uses more energy and introduces solvent pollution risks.

Results:

Mixture T-1, when so applied on a disk, (fluoropolymer surface) and so cured, will be seen to provide a hard clear protective coating, essentially satisfying all of the mentioned subject requirements; e.g., resisting moisture intrusion (and associated swell-cracking, shrinkage), with fine optical clarity and exhibiting good scratch resistance, while being easily surface cleaned.

Moisture resistance was particularly surprising and impressive—e.g., though not 100% impermeable, this hard coat will exhibit no swell-cracking even after extended immersion in water. Similarly, the hard overcoat has been observed to withstand extended extreme temperature/humidity cycling (e.g., from room temperature to 140°C and from about 40% humidity up to 80% humidity, for many weeks).

Further, this Hard outer-coating will be observed to exhibit extended stability—e.g., withstanding extended exposure to a rather extreme temperature/humidity cycling. This "stability" and associated toughness, etc., is believed to derive from the relatively cross-linked, long-chain polymer (epoxy) groups produced.

Also, this hard coat adheres (satisfactorily) to the fluoropolymer "soft pad", as is desired. Such adhesion might not result where the hard coat and/or the "soft pad" were changed—in such a case, a separate intermediate compatible (e.g., fully transparent) "adhesive inter-layer" might be called-for; however it is disfavored (e.g., it complicates thickness control).

Example II

Example I is repeated except that proportions are modified as below (Mix T-4); otherwise it is similarly formulated, applied and cured.

| Mix T-4 | Parts by wt. |
| --- | --- |
| Celrad 1700 | 17 |
| Celrad 3200 | 17 |
| TMPTA | 32 |
| 2-EHA (ethylhexyl acrylate) | 31 |
| FC-430 | 1 |
| Derocur 1173 (vs. I-184) | 2 |
| | 100 |

Results:

The results were essentially like those in Example I, except that the overcoat was more brittle and more prone to moisture intrusion and "swell-cracking". Compared with T-1, this mix gave a coating with much less ultimate tensile strength (e.g., ~2000 psi; vs. about 4000 psi with T-1).

Example III

Another alternative Mix, T-5 is formulated applied and cured as with T-1.

| Mix T-5 | Parts by wt. |
|---|---|
| RDX-52225 | 39 |
| TRPGDA (Celanese) | 39 |
| N-VP (GAF) | 14 |
| Methyl diethanolamine | 3 |
| Irgacure 651 | 5 |
| | 100 |

Results:

Essentially as with T-1, except for improved surface hardness, but with orange peel on the surface.

Disfavored formulations:

Somewhat surprisingly, certain similar "radiation-cured acrylic" mixtures do not seem practical and are disfavored for the instant purposes. For instance, a formulation like Mix T-6 below will not be sufficiently clear and transparent (at the contemplated 0.4—0.8 µm. wavelengths).

Mix T-6

Mix T-1 is replicated, except that Z-6030 replaces the Z-6020 "adhesion promoter".

Results:

Clarity badly impaired; Z-6020 evidently incompatible with the other ingredients.

Coating methods:

Following are examples of novel techniques for depositing "hard coating" mixtures like those in the foregoing Examples onto OD disk substrates (like fluoropolymer) to yield an outer protective overcoat thereof—especially one that is several mils thick, yet highly-uniform, is radiation-cured in situ, giving the mentioned environmental and other protection for such a disk over a prescribed extended life. Workers will recognize that these techniques emphasize convenient, cost-effective methods of coating and curing, with very close control of thickness, and thickness uniformity.

While the subject coating is applied to give a highly uniform thickness of about 7 mils, workers will appreciate that thicknesses of up to about 20 mils can be satisfactorily rendered.

Workers will recognize that "hard coat formulations" like those described are quite apt for a "spiral" method of application (e.g., to an OD disk, as below) according to another feature hereof, such material lending itself to such surprising simplicity and ease of dispensing, yet under close control and yielding the described surprisingly precise control of thickness uniformity.

Formulation T-1 will now be understood as to be applied to the OD disk surface f in Fig. 1 in a certain preferred spiral fashion. This will be understood as an aluminum disk on which the described tri-layer optical recording structure has been applied and, over this, a layer of fluoropolymer (or of a like "soft pad" polymeric surface).

In general, the method will be seen as involving the deposition of the coating material on the prescribed (fluoropolymer) disk surface in a prescribed number of spiral rows, or "beads" so the beads are spread out, or "leveled" into a very smooth, very uniform coating; and thereafter curing and hardening this coating to render the desired "Hard" protective overcoat. Some particular and preferred forms of this application method will now be described.

Example N-1: Application of T-1 to fluoropolymer substrate:

Step #1 Mix preparation:

A preferred form of the novel coating method will now be described wherein a preferred Hard coating mix (preferably T-1 described above), will be understood as selected, prepared and disposed for application to the disk in a spiral row of uniform symmetrical "beads", being thereafter "leveled" by a prescribed wetting (to induce a rapid, highly-uniform "leveling" of the beads on the prescribed surface) with the disk contemporaneously rotated slowly—i.e., just fast enough to induce inter-merging of adjacent beads.

Step #2: Dispense as "Spiral Beads":

More particularly, and with illustrative reference to Fig. 2, Mix T-1 will be supplied as known by workers to a prescribed controlled-rate dispensing means n (like a syringe-nozzle n, as workers know) affixed on a reciprocable arm A. Nozzle n is adapted and controlled (by known means) to dispense a prescribed, carefully-controlled, uniform stream st of the mix down onto the receiving (fluoropolymer) surface on the subject disk d at a constant rate. Thewhile arm A will be understood as to be continuously shifted radially (inward) of disk d, carefully controlled so that this stream st moves radially of disk d while the disk rotates whereby to describe the specified spiral SR (e.g., arm A translated by a linear motor as with magnetic recording heads—maintaining uniform separation, and size, of the beads). Disk rpm may also be varied, as necessary, (see below). As workers will appreciate, one may vary one or several of the three variables of: disk rpm, arm velocity and dispensing rate, while keeping the other variables constant—to deliver uniform size beads.

Thus, nozzle n is controllably swept across a prescribed radius of disk d, as the disk is rotated, deploying mix in the continuous uniform spiral SR (of "bead" segments b being of uniform separation, size and shape, as workers in the art will appreciate). The Mix may be supplied to nozzle n via a known syringe pump (not detailed), arranged to dispense at a prescribed rate to form such a spiral (e.g., at 1—3 gm/min, yielding about 40 beads across a 3.5" radial band $B_b$).

Control of mix viscosity is found to be very important to get good distribution and uniform settling.

Care should be taken to avoid "holidays" or "pinholes" (voids where little or no solvent condenses, giving a different "wetting" there or none at all—note: increased ambient temperature seems to enlarge such voids, probably because too much solvent evaporates too fast).

Step #2-A: bead-leveling:

The technique of applying such a precisely-uniform polymer coating (thickness of 170+10 μm) on a fluoropolymer surface is difficult. The following procedure is a preferred method of overcoating via a spinning technique. The spinning process includes the dispensing of coating solutions on a spinning substrate followed by leveling and curing. To have a uniform coating we dispense the exact amount of coating solution at low spin speed (preferably 4—16 rpm here) on the substrate surface in a spiral fashion. It is important that this coating solution properly "wet" this substrate surface; this is controlled by the viscosity and the surface tension of the coating solution and by the surface tension of the substrate surface material, as well as by outward-spreading forces (the effect of the centrifugal force induced by spinning the disk-substrate).

The coating beads on each track will be laid down so as to "just barely" touch one another and thus wet the entire surface. Thewhile, spinning rpm should be carefully controlled such that the coating solution will not move radially-outward appreciably (under the influence of centrifugal force) yet so the surface tension forces and centrifugal force will overcome the retarding coating viscosity and thus spread the coating solution uniformly.

Because the surface tension of a fluoropolymer is quite low, such an applied coating solution is apt to "wet" only very slowly. To improve and accelerate such wetting, we maintain a relatively low flow-rate (from the dispensing syringe), with a relatively high spinning rpm during dispensing—leading to a relatively large number of relatively "thin" beads (spiral track) on the substrate, with adjacent beads kept tangent to one another and the substrate so-wetted more quickly and completely (across its entire surface).

The dispensing rate may be kept, for instance, at a constant 1 gr./min. to 3 gr./min. One possible problem is that the flow stream (bead spiral) will not be continuous unless the syringe tip is kept relatively close to the (disk) substrate. Thus, to render a continuous spiral track using a tip with .033" ID, one must keep this distance between the tip and the coating surface to about 170—250 μm. The tip can now help spread-out the dispensed drops and level them. This was observed to work quite successfully.

The dispensing tip was translated radially (i.e., relatively to the center of the spinning substrate) so as to lay down enough beads (tracks) to cover the entire surface. In addition to so controlling radial translation speed, disk rpm (spinning speed) was also varied relatively continuously from 4 rpm at the OD to 11 rpm at the ID (so the tangential velocity will be for all tracks, from outside to inside radially) this prevents from "oversplitting".

The bead forming step is followed by application of a solvent adapted to wet said mixture and the disk surface. It wets and coats the beads and the intervening disk surface relatively continuously. The solvent is so selected and applied as to induce and enhance said leveling.

Step #3: Cure:

After the entire substrate is so covered with coating, the disk is preferably spun-up to enhance (facilitate, accelerate) leveling (here about 4 rpm for about 7 minutes is satisfactory). The coating may then be cured, e.g., 3 minutes under ambient (UV) conditions; then another 3 minutes UV exposure under a $N_2$ environment. Such an initial "air-cure" (first 3 min.) is preferred to avoid "wrinkling". We find, surprisingly, that if the initial UV cure takes place in an $N_2$ atmosphere, the top of the coating is apt to retard penetration of the shorter wavelengths and become "wrinkled"—evidently because its "base" then cures less (or more slowly—e.g. it may remain "fluid" longer).

With leveling complete and the coating thus evenly distributed across the face of disk d, it will now be cured, in situ, (and otherwise treated) to yield the desired hard protective overcoating. Thus, disk rotation may cease and the disk be subjected to curing conditions—preferably without moving it from the "coating station", lest coating uniformity be disturbed or contaminants be introduced (e.g., dust settle on the now-tacky surface).

UV curing may be invoked at a curing station. That is, with the material evenly spread across the subject disk surface, the coating is photo-cured by exposure to ultraviolet light "under air", then under an inert atmosphere (e.g., $N_2$ flush to expel all oxygen) until the coating is properly cured and "hard". We find about 3 minutes total exposure to 0.3—0.4 μm UV (e.g., 50 mW/cm$^2$ intensity at .366 μm) "in air"; then a like exposure "under $N_2$" is quite satisfactory.

Alternatively, workers will understand that other like curing methods (e.g., other radiation) may be used in certain instances, with appropriate adjustments (e.g., of the type, concentration of photoinitiator).

Results:

As mentioned before, the thickness uniformity is quite excellent (on the order of $\pm 168$—182 µm over a 3.5" band for a "nominal 7 mil" coating is impressive, especially in view of the simplicity of the application apparatus and the type of coating mixture involved). As mentioned, the cure times and temperatures are quite convenient, as are the rest of the treatment conditions.

Example M-2 ($SiO_2$ flash on fluoropolymer):

Whatever bead application technique is used, it may be advisable to pre-treat the substrate as suggested elsewhere to enhance wetting, adhesion and related characteristics. For instance, in Example N-1 above, or a modification thereof, one may wish to enhance the hydrophilicity of the substrate and the wetting thereto of the T-1 beads. In such a case, we have found it advantageous to apply or etch a very transparent "flash" coating of $SiO_2$ on the fluoropolymer prior to applying the beads (of T-1 or the like, cf. $SiO_2$ on layer f of Fig. 1).

**Claims**

1. A method of applying a coating of curable viscous material to a disk having a soft pad on its surface, said soft pad consisting of a material having a low surface tension, in which the curable material is dispensed through a nozzle which is moved radially relative to the disk while the disk is rotated about its centre so that the curable material is deposited on the pad in a spiral path, and in which the deposited material is cured to form a hard coating on the disk, characterised in that the curable material is deposited as a continuous uniform spiral of mutually spaced beads, and in that the bead-forming step is followed by application of a prescribed solvent adapted to wet said curable material and the pad surface, this being applied to wet and coat the so-applied beads and the intervening pad surface relatively continuously, this solvent also being selected and applied so as to induce a continuous level coating of said curable material evenly distributed across the face of the disk.

2. A method as claimed in Claim 1, wherein said soft pad consists of a modified fluoropolymer.

3. A method as claimed in Claim 1 or Claim 2, wherein said wetting is further promoted by the application of a polar strike to the surface of said pad before the deposition of said curable material.

4. A method as claimed in Claim 3, wherein said polar strike consists of methyl methacrylate.

5. A method as claimed in Claim 3 or Claim 4, wherein said polar strike is deposited by plasma polymerisation or by plasma etching.

6. A method as claimed in Claim 1 or Claim 2, wherein said wetting is improved by the deposition on said pad of a light transparent strike or flash of metal or metal oxide.

7. A method as claimed in Claim 6, wherein said flash consists of $SiO_2$.

8. A method as claimed in any of the preceding Claims, wherein the cured coating is about 0.1—0.2 mm (several mils) thick.

9. A method as claimed in Claim 8, wherein the mixture is pumped at several gms/min through a syringe-type nozzle held about one hundred to several hundred µm above the disk surface, rotating at about 4—10 rpm, to help quickly level the bead segments by "topping" them.

10. A method as claimed in Claim 9, wherein the curing is principally, or solely, with UV radiation and with little or no need for supplemental heating.

11. A method as claimed in Claim 10, wherein the UV exposure is applied first in ambient air, then accompanied by an inert atmosphere, whereby to minimize "wrinkling".

12. A method as claimed in any of Claims 9 to 11, wherein about 4—6 beads/cm, radially are applied to yield a highly uniform coating thickness of about 0.18 mm (7 mils).

13. A method as claimed in Claim 12, wherein the cured coating thickness varies about one hundred to several hundred µm over a 75—100 mm radial band.

14. A method as claimed in any of the preceding Claims, wherein the curable material is a mixture including UV-cured monomer or pre-polymer moieties having viscosities apt for such nozzle-dispensing.

15. A method as claimed in any of the preceding Claims, wherein the bead is applied as one continuous spiral with successive adjacent segments kept spaced by a prescribed bead-spacing apt for such leveling action.

16. A method as claimed in Claim 14, wherein the mixture includes at least one acrylate plus at least one associated viscosity-controlling diluent and a compatible cross-linking entity, along with one or more compatible surfactants adapted for imparting a wetting action and set-up of the beads.

17. A method as claimed in Claim 15, wherein said nozzle is adapted and controlled to so dispense the mixture at a prescribed delivery rate, while blading the mixture level; wherein the nozzle is mounted on an arm adapted and controlled to be translated radially of said disk; wherein the delivery rate, translation rate and disk rpm are inter-controlled to effect deposition of said segments of a prescribed uniform size and configuration, and at a prescribed constant segment separation; and wherein deposition places said segments contiguous, or nearly so, whereby to induce self-leveling and wherein deposition proceeds from outward-inward so as to help compensate for inward-pushing by an adjacent segment.

18. A method as claimed in Claim 17, wherein for a constant delivery rate, disk rpm is continually increased as a function of segment position, radially, and arm velocity is also controllably varied whereby to improve the thickness uniformity of the ultimate coating.

## Patentansprüche

1. Verfahren zum Aufbringen eines Überzuges aus härtbarem viskosen Material auf eine Scheibe mit einem weichen Polster auf ihrer Oberfläche, bei der das weiche Polster aus einem Material mit geringer Oberflächenspannung besteht, bei dem das vernetzungsfähige Material durch eine Düse aufgebracht wird, die relativ zur Scheibe radial bewegt wird, während die Scheibe um ihren Mittelpunkt rotiert, so daß das vernetzungsfähige Material auf dem Polster in spiralförmiger Bahn aufgebracht wird und durch Härten eine harte Beschichtung auf der Scheibe ergibt, dadurch gekennzeichnet, daß das härtbare Material als ununterbrochene, gleichmäßige Spirale aus beabstandeten Wülsten aufgebracht wird und daß nach dem Wulst-formenden Schritt die Verwendung eines vorgeschriebenen Lösungsmittels folgt, das geeignet ist, das härtbare Material und die Polster-Oberfläche anzufeuchten, das aufgetragen wird, um die derart aufgebrachten Wülste und die dazwischenliegende Polster-Ober-fläche im wesentlich kontinuierlich anzufeuchten und und zu überziehen und daß außerdem so ausgesucht und verwendet wird, daß es eine ununterbrochene Überzugsschicht des genannten härtbaren Materials, gleichmäßig über die Oberfläche der Scheibe verteilt, erzeugt.

2. Verfahren nach Anspruch 1, dadurch gekennzeichnet, daß das genannte weiche Polster aus einem modifizierten Fluoropolymer besteht.

3. Verfahren nach Anspruch 1 oder 2, dadurch gekennzeichnet, daß die Anfeuchtung durch die Anwendung einer polaren Zwischenschicht (strike) auf der Oberfläche des genannten Polsters vor dem Aufbringen des genannten härtbaren Materials zusätzlich befördert wird.

4. Verfahren nach Anspruch 3, dadurch gekennzeichnet, daß die genannte polare Zwischenschicht (strike) aus Methylmethacrylat besteht.

5. Verfahren nach Anspruch 3 oder 4, dadurch gekennzeichnet, daß die genannte polare Zwischenschicht (strike) durch Plasmapolymerisation oder Plasmaätzen aufgetragen wird.

6. Verfahren nach Anspruch 1 oder 2, dadurch gekennzeichnet, daß die genannte Anfeuchtung durch das Auftragen einer dünnen transparenten Zwischenschicht (strike or flash) aus Metall oder Metalloxid verbessert wird.

7. Verfahren nach Anspruch 6, dadurch gekennzeichnet, daß die genannte transparente Zwischenschicht (flash) aus Siliziumdioxid ($SiO_2$) besteht.

8. Verfahren nach einem der vorstehenden Ansprüche, dadurch gekennzeichnet, daß der gehärtete Überzug ungefähr 0,1 bis 0,2 mm (mehrere mils) dick ist.

9. Verfahren nach Anspruch 8, dadurch gekennzeichnet, daß das Gemisch mit mehreren g/min. (gms/min) durch eine spritzenartige Düse gepumpt wird, die zum schnellen Niveauausgleich 100 µm bis mehrere 100 µm über der Scheibenoberfläche der mit vier bis zehn Umdrehungen pro Minute rotierende Scheibe angeordnet ist.

10. Verfahren nach Anspruch 9, dadurch gekennzeichnet, daß das Härten hauptsächlich oder ausschließlich durch UV-Strahlung, mit nur geringer, ergänzender Erwärmung oder ohne ergänzende Erwärmung bewirkt wird.

11. Verfahren nach Anspruch 10, dadurch gekennzeichnet, daß die UV-Strahlung zunächst in Umgebungsatmosphäre und dann in einer Schutzgasatmosphäre angewendet wird, durch die Unebenheiten minimiert werden.

12. Verfahren nach einem der Ansprüche 9 bis 11, dadurch gekennzeichnet, daß ungefähr vier bis sechs Wülste/cm radial aufgebraccht werden, um eine sehr gleichmäßige Dicke des Überzuges von ungefähr 0,18 mm (7 mils) zu erhalten.

13. Verfahren nach Anspruch 12, dadurch gekennzeichnet, daß die Dicke des gehärteten Überzuges zwischen ungefähr 100 µm und mehreren 100 µm in einem 75 bis 100 mm breiten radialen Band variiert.

14. Verfahren nach einem der vorstehenden Ansprüche, dadurch gekennzeichnet, daß das härtbare Material eine Mischung ist, die viskose, UV-härtbare monomere oder vorpolymere Komponenten mit für Düsenverteilung geeigneter Viskosität enthält.

15. Verfahren nach einem der vorstehenden Ansprüche, dadurch gekennzeichnet, daß der Wulst eine ununterbrochene Spirale ist, deren aufeinanderfolgende, benachbarte Segmente einen Abstand entsprechend einem vorgeschriebenen Wulstabstand erhalten, der für eine Einebnung geeignet ist.

16. Verfahren nach Anspruch 14, dadurch gekennzeichnet, daß die Mischung mindestens ein Acrylat und mindestens ein zugeordnetes viskositäts-kontrollierendes Verdünnungsmittel und eine kompatible, vernetzende Substanz, zusammen mit einer oder mehreren angepaßten oberflächenaktiven Substanz(en) zum Vermitteln der Befeuchtung und Haftung der Wülste enthält.

17. Verfahren nach Anspruch 15, dadurch gekennzeichnet, daß die genannte Düse so angepaßt und geregelt wird, daß die Mischung mit einer vorgeschriebenen Fördergeschwindigkeit verteilt wird, während die Oberfläche geglättet wird, und daß die Düse an einem Arm befestigt ist, der so angepaßt ist und

EP 0 139 478 B1

geregelt wird, daß er radial zur genannten Scheibe eine Translationsbewegung ausführt, und daß die Fördergeschwindigkeit, die Translationsgeschwindigkeit und die Scheibendrehzahl wechselseitig geregelt werden, um das Aufbringen der genannten Segmente in einer vorgeschriebenen, gleichmäßigen Größe und Anordnung und mit einem vorgeschriebenen, konstanten Segmentabstand zu erreichen, und daß die Segmente wenigstens annähernd nebeneinanderliegend aufgebracht werden, so daß eine selbsttätige Einebnung ausgelöst wird, und daß das Aufbringen von außen nach innen fortschreitet und ein Einwärtsdrücken benachbarter Segmente kompensiert.

18. Verfahren nach Anspruch 17, dadurch gekennzeichnet, daß bei einer konstanten Fördergeschwindigkeit die Scheibendrehzahl in Abhängigkeit von der radialen Segmentposition kontinuierlich steigt und die Armgeschwindigkeit ebenfalls geregelt wird, wodurch die gleichmäßige Dicke des letzten verbleibenden Überzuges verbessert wird.

## Revendications

1. Procédé d'application d'un revêtement de matière visqueuse polymérisable sur un disque ayant à sa surface une couche souple, cette couche souple étant en un matériau à faible tension de surface, procédé selon lequel on distribue une matière polymérisable par une buse que l'on déplace dans la direction radiale par rapport au disque pendant que celui-ci tourne autour de son centre pour déposer la matière polymérisable sur la couche suivant un tracé en spirale, la matière déposée étant polymérisée pour former un revêtement dur sur le disque, procédé caractérisé en ce que la matière polymérisable est déposée suivant une spirale uniforme continue de gouttelettes espacées les unes des autres et en ce que cette phase de formation de gouttelettes est suivie par l'application d'un solvant prescrit pour mouiller la matière polymérisable et la surface souple, de façon à mouiller et revêtir les gouttelettes ainsi disposées et imbriquer la surface souple de manière relativement continue, le solvant étant choisi et appliqué pour induire un revêtement de niveau continu de matière polymérisable régulièrement réparti à la surface du disque.

2. Procédé selon la revendication 1, caractérisé en ce que la couche couple est du fluoropolymère modifié.

3. Procédé selon la revendication 1 ou la revendication 2, caractérisé en ce que le mouillage est en outre favorisé par l'application d'une couche polaire à la surface de la couche souple avant le dépôt de la matière polymérisable.

4. Procédé selon la revendication 3, caractérisé en ce que la couche polaire est du méthyl méthacrylate.

5. Procédé selon la revendication 3 ou la revendication 4, caractérisé en ce que la couche polaire est déposée par polymérisation au plasma ou attaque chimique au plasma.

6. Procédé selon la revendication 1 ou la revendication 2, caractérisé en ce que le mouillage est amélioré par le dépôt sur la couche souple d'une couche transparente à la lumière ou d'un dépôt de métal ou d'un oxyde métallique.

7. Procédé selon la revendication 6, caractérisé en ce que le dépôt est un dépôt de $SiO_2$.

8. Procédé selon l'une quelconque des revendications précédentes, caractérisé en ce que le revêtement polymérisé a une épaisseur d'environ 0,1—0,2 mm (plusieurs mils).

9. Procédé selon la revendication 8, caractérisé en ce que le mélange est pompé suivant un débit de plusieurs gm/min par une buse en forme de seringue maintenue à un centième jusqu'à plusieurs centièmes de micron au-dessous de la surface du disque qui tourne à une vitesse de rotation comprise entre 4—10 tours par minute pour favoriser le nivellement rapide des segments en forme gouttelettes en les faisant fusionner.

10. Procédé selon la revendication 9, caractérisé en ce que la polymérisation est pincipalement ou uniquement faite avec un rayonnement ultraviolet avec peu ou pas de chauffage supplémentaire.

11. Procédé selon la revendication 10, caractérisé en ce que l'exposition au rayonnement ultraviolet est appliquée d'abord sous une atmosphère d'air ambiant, puis sous une atmosphère de gaz inerte de manière à réduire la déformation.

12. Procédé selon l'une quelconque des revendications 9 à 11 en appliquant 4—6 gouttelettes par cm, radialement pour obtenir une épaisseur de revêtement très uniforme d'environ 0,18 mm (7 mils).

13. Procédé selon la revendication 12, caractérisé en ce que l'épaisseur du revêtement polymérisé varie entre une centaine et plusieure centaines de microns dans une bande radiale de 75—100 mm.

14. Procédé selon l'une quelconque des revendications précédentes, caractérisé en ce que le matériau polymérisable est un mélange contenant un monomère polymérisé au rayonnement ultraviolet ou un prépolymère ayant des viscosités permettant une distribution par une telle buse.

15. Procédé selon l'une quelconque des revendications précédentes, caractérisé en ce que les gouttelettes sont appliquées suivant une spirale continue avec des segments successifs adjacents maintenus espacés d'un espacement de gouttelette prescrit pour l'effet de nivellement.

16. Procédé selon la revendication 14, caractérisé en ce que le mélange contient au moins un acrylate et au moins un diluant réglant la viscosité et un agent compatible pour les liaisons transversales ainsi qu'un ou plusieurs surfactants compatibles assurant le mouillage et le dépôt des gouttelettes.

17. Procédé selon la revendication 15, caractérisé en ce que la buse est réglée et montée pour distribuer le mélange suivant un débit de distribution prescrit tout en mettant à niveau le mélange, le buse étant portée par un bras commandé en translation radiale du disque, le débit de distribution, la vitesse de translation et la vitesse de rotation du disque étant commandés de manière combinée pour déposer des segments de dimensions uniformes prescrites et de forme appropriée avec une séparation constante des segments et on place les segments de manière contiguë ou pratiquement contiguë pour induire un effet d'auto-nivellement, le dépôt se faisant de l'extérieur vers l'intérieur pour compenser la poussée vers l'intérieur résultant d'un segment adjacent.

18. Procédé selon la revendication 17, caractérisé en ce que pour assurer une distribution constante, on augmente en continu la vitesse de rotation du disque en fonction de la position du segment, dans la direction radiale et on commande la vitesse du bras pour la varier et améliorer l'uniformité de l'épaisseur du revêtement obtenu en définitive.

EP 0 139 478 B1

## FIG.1.

$$O\text{-}C = f + g$$

$$T\text{-}L = c + d + e$$

$$S' = A + B$$

## FIG.2.

1

# FIG.3.

| | |
|---|---|
| OVERCOAT | OC' |
| | g' |
| HARD OVERCOAT | |
| SOFT OVERCOAT | f' |
| ABSORBER | e' |
| SPACER | d' |
| MIRROR | c' |
| SUBING LAYER | B' |
| PRIMER | P' |
| SUBSTRATE | A' |

R

T-L

EP 0 139 478 B1